# EUROPEAN PATENT APPLICATION

(11) **EP 4 682 411 A1**
(43) Date of publication of application: **21.01.2026**
(21) Application number: 24210276.2
(22) Date of filing: 31.10.2024
(51) Int. Cl.: F16K 5/16, F16K 11/076, F16K 31/524, F16K 31/53, F16K 31/04, F16K 11/083

(54) **SEQUENTIAL VALVE**

(30) Priority: 19.07.2024 EP 24189710
(71) Applicant: MoldTecs-01-2022 GmbH, 38667 Bad Harzburg (DE)
(72) Inventor: WARNERY, Stéphane, 53970 L'Huisserie (FR); FOULBOEUF, Gwénaël, 53260 Entrammes (FR); NOISEAU, Pascal, 53061 Laval cedex 9 (FR); BADIBANGA, Xavierr, 35000 Rennes (FR)
(74) Representative: STT Sozietät Thews & Thews

(57) **Abstract**

The invention relates to a multiport valve module system, comprising
a) a housing 1 with a plurality of ports 1.1a-h has a central axis X, which encloses a working chamber 1.1 closed with a cover 1.2 that is connected to the housing 1 for sealing the working chamber 1.1.
b) a valve body 2 with at least one channel 2.3a-d with a central channel axis AC, placed in the working chamber 1.1 and being rotatable about the central axis X and being linear moveable in axial direction of the central axis X;
c) a rotatable driving element 3 positioned in the housing 1 to drive the valve body 2 for the rotation and for the linear movement;
d) a linear profile 4 of the driving element 3 engaged with the valve body 2 for linear movement;
e) a rotation profile 5 of the driving element 3 and of the valve body 2 for causing the rotation. The friction is to be lowered, the torque is to be reduced and the sealing is to be improved. The linear profile 4 and the rotation profile 5 allow the rotation and the linear movement of the valve body 2 to be repeated alternately, whereby the direction of the rotation of the driving element 3 remains the same.

## Description

### TECHNICAL FIELD

The invention relates to a multiport valve module system, comprising a housing with a plurality of ports and a central axis, which encloses a working chamber closed with a cover that is assembled to the housing for sealing the working chamber and a valve body with at least one channel and with a plurality of openings, placed in the working chamber and being rotatable about the central axis and being linear moveable in axial direction of the central axis. A rotatable driving element positioned in the housing is to drive the valve body for the rotation and for the linear movement. A linear profile of the driving element as well as of the valve body causes the linear movement and a rotation profile of the driving element and of the valve body causes the rotation. It is not relevant whether the driving element drives the valve body directly or indirectly. The rotation and the linear movement of the valve body are caused due to the rotation of the driving element.

### BACKGROUND

A generic rotatable four-way valve for fluids is already known from EP 3 109 522 A1, closest prior art, in which a torque of the drive shaft is transmitted to the valve body and to driving discs. These driving discs drive the spool to overcome the elasticity of a spring to move downwards, so that the spool and the valve body are separated to open the ports on the valve body. In the above moving process, the first mating shaft of the driving shaft and the first mating hole of the spool are separated, so the spool does not rotate. According to US 2013/0292593 A1, the translatory movement and the rotation of the valve body are initiated simultaneously by a planetary gear. GB 2 609 634 A and GB 2 186 951 A describe multi-way valves. The open position is caused by the cams. The translatory movement and the rotation of the valve body are initiated simultaneously.

It is an object of the present invention to design and arrange a rotatable multiport valve module system in such a way that the friction is lowered, the torque is reduced and the sealing is improved.

According to an aspect of the invention, the problem is solved that due to the linear profile and the rotation profile, the rotation and the linear movement of the valve body are repeatable alternately, whereby the direction of the rotation of the driving element remains the same or is continuous. At the linear profile and at the rotation profile the driving element, explicit the same driving element drives directly the valve body. This rotation in only one direction and the linear movement of the valve body take place one after the other, they are discontinuous. There is no reverse movement of the driving element required or necessary for the discontinuous rotation of the valve body. The translation and rotation movement are fully sequential, means that the valve body does not rotate and translate in the same time. The direction of the rotation of the driving element remains the same during the repetition of both movements, the rotation and the linear movement.

The driving element as a kind of input shaft and the valve body have two different mechanical couplings or drives, the linear profile and the rotation profile. The (first) linear coupling is transmitting the translation movement respectively the linear movement by sequences. The (second) rotational coupling is transmitting the rotation movement by sequences. This allows from a continuous rotation of the input shaft to obtain a sequence of translation and a sequence of rotation of the valve body. In particular, but not limiting these two couplings allow a separation of the rotation movement and the translation movement. The rotation profile is to achieve a temporary form-fitted coupling between the driving element and the valve body in one or both circumferential directions. The partial toothing (malte cross shaped) of the rotation profile or the driving element allows to transform a continuous rotational movement of the driving element into a discontinuous rotational movement of the valve body.

The linear profile is formed by the shape of the driving element and by the shape of the valve body. The linear profile transforms a rotational movement of the driving element into linear movement of the valve body. The rotation profile consists of the shape of the toothing of the driving element and the shape of the toothing of the valve body. The rotation of the driving element causes the rotation of the valve body. The rotation profile interlocks with the toothing respective gearing in circumferential direction as to transfer the force for the rotation of the valve body dependent of the angle of the driving element.

A main aspect of the mechanic of such a rotatable multi-way valve is, that the housing has an inner housing surface and the valve body has an outer valve surface, whereby the housing surface and the valve surface are sealed to each other for channeling, transfer and redirection of a liquid. The surfaces can have at least in part a rotationally symmetrical shape, especially a cylindrical shape. Preferred is a conical or a spherical geometry such that the two surfaces, can be pressed against each other in radial direction by moving the valve body in axial direction.

It is provided that the working chamber has an inner housing surface and has a plurality of ports for supplying and/or discharging a medium into or out of the working chamber. The valve body has at least one channel for connecting at least two ports of the housing. The geometry or architecture of the transmission allows easily to drive the valve body for changing the fluid connections between said channels and said ports.

A switching operation begins with a closed or sealed position of the valve body within the working chamber. In the closed position the channels i.e., it walls are tightly coupled to the ports of the housing. To start the switching process, the valve body is moved in an axial direction so that the walls with their seal are at a distance from the housing surface and the valve body is thus open. In the open position of the valve body there is no or very little friction between the sealing elements when the valve body is rotated. After reaching the open position the valve body is rotated into another position to couple different ports of the housing with the channels. After the valve body's stroke back into the closed position the sealing is tight again. This means that the valve body is moved at least three times during one switching operation - two strokes and one turn.

The wording of axially or axial direction, radially or radial direction, circumferentially or circumferential direction and coaxially or coaxial position have all a meaning in relation to the central axis. A rotation or turn is also in relation to the central axis and means the movement in circumferential direction. A linear movement or stroke is also in relation to the central axis a linear movement in axial direction or a translation. Rotationally symmetric includes at least partially rotationally symmetric, just as conical or spherical as well as at least partially conical or spherical. For the purposes of the invention, a linear movement is to be understood as meaning the same as a translational movement. An offset is the amount or distance between two parallel axes.

The linear profile is aligned in axial direction and the rotation profile is aligned in radial direction, whereby the connection and disconnection between the valve body and the driving element via said rotation profile is alternating or discontinuous. The linear profile comprises at least one cam at the driving element and at least a sliding pin at the valve body with the cam and the sliding pin in active contact in axial direction. The rotation profile comprises a radially toothing positioned circumferentially at the valve body and comprises a radially toothing encircling the driving element at least partly. The driving element drives directly the valve body with the function of the linear profile and also with the function of the rotation profile The transmission ratio between the rotation of the driving element and the rotation of the valve body is greater than 1/1, preferred greater than 3/1 or 4/1. The rotation profile of the driving element has at least two sectors, at least one sector which has the radial toothing and at least one other sector without radial toothing. The driving element has a rotation axis positioned with an off-set to the central axis or being coaxial to the central axis. Tthe transmission of the driving force from the driving element to the valve body takes place directly from the driving element to the valve body or indirectly by other components. The valve body has a circumferential valve surface and a plurality of channels orientated with the central channel axis parallel to the valve surface and with the valve surface and the channels being covered with a sealing element. The channels with their respective central channel axis and/or the ports are arranged in the axial direction in at least two different planes, the two different planes being aligned at right angles to the central axis and axially spaced by one distance. A loading component (6) is assembled between the housing and the valve body, by means of which that valve body is preloaded in axial direction against the driving element. Method for moving a multiport valve module system comprising a housing has a central axis, which encloses
a) a working chamber and
b) a valve body placed in the working chamber (1.1), being rotatable about the central axis and being linear moveable in axial direction of the central axis and
c) a rotatable driving element positioned in the housing to drive the valve body, whereby
d) when rotating the driving element, the valve body is alternately moved in the axial direction or rotated and
e) the rotation and the linear movement are repeated by rotating the driving element in the same direction.

The valve body has a conical shape. The driving element and the valve body have a gear shape to ensure the driving of the valve body by the driving element in rotation. The gear shape on the driving element is not continuous to have at least one circular sector to disconnect the rotation movement of the driving element and the valve body. This gear portion allows to drive the valve body. The circular portion allows to disconnect the driving element from the valve body. The sealing element is designed in order to use the pressure to facilitate the sealing. The sealing element is overmolded on the valve body or the housing. The driving element has a malte cross shape to drive the valve body in rotation. The malte cross shape is a specific cam shape to transform a continuous rotational movement into a discontinuous rotational movement. The rotation movement is reversible. The loading component is a spring and a spring holder whose function is to reduce the friction between the spring and the valve housing and/or the valve body. The valve body position is measured directly by a position sensor for example (but not limitative) a hall effect sensor measuring the magnetic field orientation of a magnet positioned on the valve body. The valve body position is indirectly measured for example (but not limitative) by counting the round of the DC motor of the actuator, or measuring the position of the valve body. The valve body has a stopper to stop the rotation of the valve body at a pre-definite rotation stroke. The valve body translation stroke doesn't uncompress totally the sealing element then keep a good level of sealing and allows to have a proportional control of the different ports. The valve housing is a Thermal Management Module housing to manage the coolant flow in a thermal management system. The valve housing is a Thermal Management Module housing for transportation industry - for example for battery electrical vehicle or hybrid vehicle.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates a detailed movement diagram of the valve body;
- Figure 2: illustrates a sketch of the function of the driving element;
- Figure 3: illustrates a sectional view of a multiport valve module system with a closed valve body;
- Figure 4: illustrates a sectional view of a multiport valve module system with an open valve body;
- Figure 5: illustrates a perspective view on a top side of a valve body;
- Figure 6: illustrates a perspective view on a down side of a driving element;
- Figure 7: illustrates an exploded perspective view drawing of a multiport valve module system;
- Figure 8: illustrates a perspective top view on the multiport valve module system according to fig. 3, 4 without the cover;

The description refers to a multiport valve module system with a housing 1 enclosing a working chamber 1.1 and with a valve body 2 placed in the working chamber 1.1. The valve body 2 being rotatable about the central axis X and being linear moveable in axial direction of the central axis X. A rotatable driving element 3 is positioned in the housing 1 to drive the valve body 2, whereby the valve body 2 is alternately either moved in the axial direction or rotated and the rotation and the linear movement are repeated by rotating the driving element 3 in the same direction.

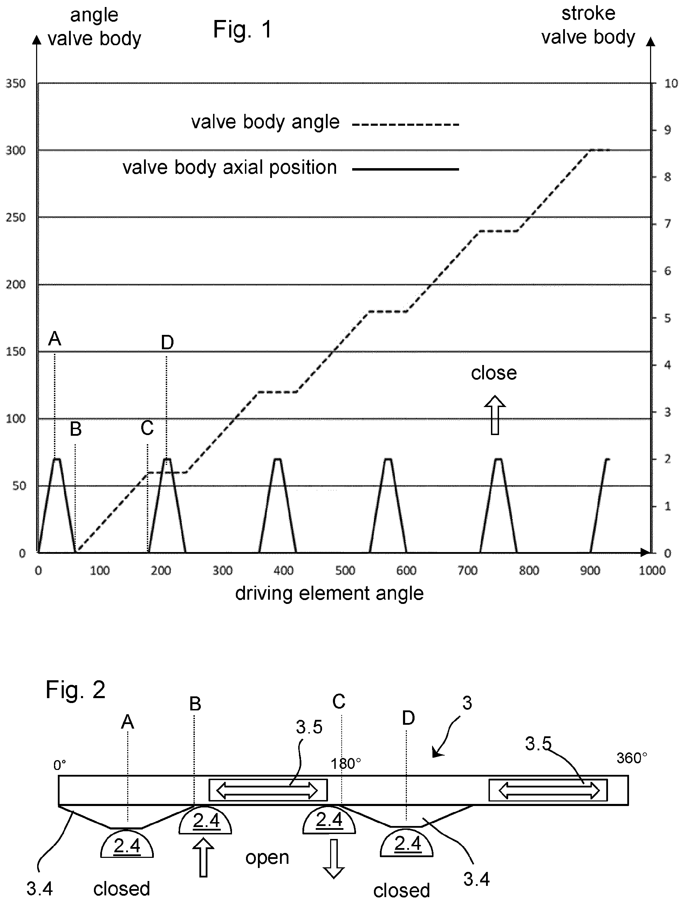

Fig. 1 shows a diagram of the angle valve body (Y) and of the valve body axial stroke position (Y) over the driving element angle. The valve body angle is the dotted line, the valve body axial position due to the stroke of the valve body is the solid line. Fig. 2 shows with reference to fig. 1 a principle of the geometry of the linear profile and the rotation profile. With a 360-degree rotation of the driving element 3, the valve body 2 is moved twice in a translational movement to open and close and is turned twice. In the two positions A and D, the valve body 2 is closed. In positions B and C, as well as between the two positions B and C, the valve body 2 is open. The valve body 2 opens and closes without turning the valve body 2. The valve body 2 is turned only when the valve body 2 is open. Starting in position A, where the valve body 2 is in its lower sealed position there is a turn of the driving element 3 of a few degrees where no stroke is applied (see fig. 2). Followed by a turn of the driving element 3 of where the valve body 2 gets lifted out of its sealed position within the working chamber 1.1 up (see position B).

Between the driving element 3 angle of about 60 and 180 degree there in no stroke of the valve body 2, but only a rotation of the valve body 2. During this turn of about 120 degree of the driving element 3 the valve body 2 rotation is increased by about 60 degrees (see position C). The rotation of the valve body 2is in linear correlation to the driving element angle.

In position C, e.g., a position of the driving element 3 angle of about 180 degree the next ramp movement of the valve body 2 begins. Over the next degrees of the driving element 3 angle the valve body 2 is replaced in its sealed position. Over the next degrees of the driving element 3 angle the valve body 2 stays sealed followed by the next opening turn as described above. Between the driving element 3 angle of 180 and 240 degree there is again no rotation of the valve body 2, but only said closing stroke of the valve body 2 followed by an opening stroke if desired. The valve body 2 gets lowered (see position D) in its sealed position within the working chamber 1.1 again.

Stroking and turning the valve body 2 occurs one after the other while turning the driving element 3. Within a 360 degree turn of the driving element 3 there are two stroke phases and two turn phases of the valve body 2. The driving element 3 can be turned endless in the same direction while it performs said valve body 2 stroke- and turn-movements.

To rotate the vale body 2 about 360 degrees, the driving element 3 has to be turned several times around 360 degrees. For this embodiment one rotation of the driving element 3 generates a 120 degree turn of the valve body 2.

To generate said valve body 2 stroke movements there is a driving element 3 according to fig. 2 having a driving surface 3.1 with a linear profile 4 with cams 3.4 within a sector 3A protruding over said driving surface 3.1. The valve body 2 has one or more sliding pins 2.8 extending opposed in axial direction and being in axial contact with said driving surface 3.1. The cams 3.4 are blocking members preventing the valve body 2 lifting due to a spring force (see position A). Due to turning said driving element 3 said driving surface 3.1 and its cams 3.4 move (to the left) relative to said sliding pins 2.8 allowing the sliding pins 2.8 to make a lift stroke (see position B). The following sector 3B is flat, without cams. Hence no stroke is generated, but a rotation. For this the valve body 2 stays within the lifted position. In position C, i.e., a position of the driving element angle of about 180 degree the next ramp movement of the valve body begins due to the next cam 3.4 engaging with the sliding pin 2.8 bringing the valve body 2 back in its lowered sealed position. Said rotation of the valve body 2 in sector 3B is described hereinafter.

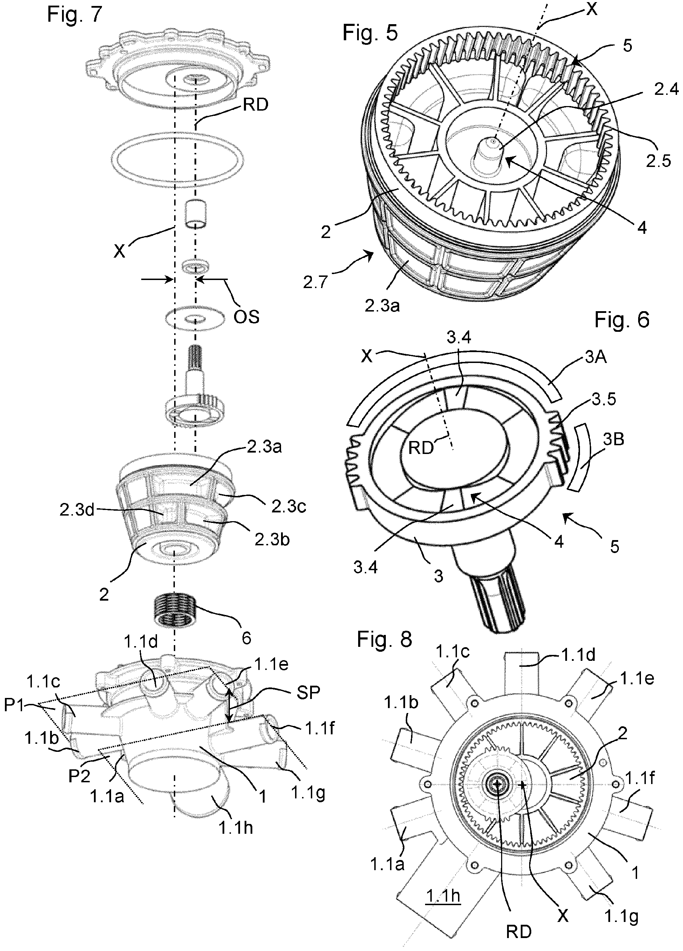

There is a rotation profile 5 comprising a radially toothing 2.5 positioned circumferentially at the valve body 2 (fig. 5) and a radially toothing 3.5 encircling the driving element 3 at least partly (fig. 6). The rotation profile 5 of the driving element 3 has the two sectors 3A, 3B. The sector 3B has the radial toothing 3.5 and the sector 3A is without radial toothing. Hence the valve body 2 is forced to rotate if the radially toothing 3.5 of sector 3B engages the rotation profile 5. In this sector 3B there is no axial stroke move. If the radially toothing 3.5 of sector 3B does not engages the rotation profile 5 but sector 3A is applied no rotation generated to the valve body, but an axial stroke move (fig 8). Because said driving surface 3.1 with its cams 3.4 release said sliding pins 2.8 and the valve body lifts from its sealed position due to said spring force.

For this the driving element 3 has acc. to Fig. 7, 8 a rotation axis RD positioned with an offset OS to the central axis X. There is a bearing 1.2a within the cover 1.2 for a shaft 3.6 the driving element 3 with the same offset OS.

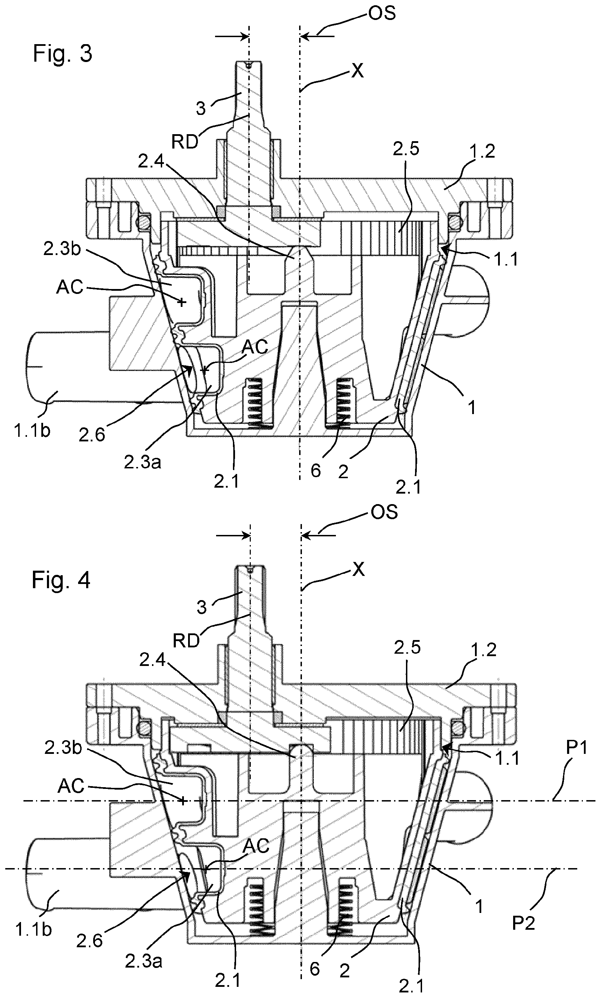

According fig. 3-4 and 7 the multiport valve module system comprises a housing 1 with a plurality of ports 1.1a-h with has a central axis X, which encloses a working chamber 1.1. The working chamber 1.1 is closed via a cover 1.2 that is connected to the housing 1. There is a valve body 2 with four channels 2.3a-d with a central channel axis AC, placed in the working chamber 1.1 and being rotatable about the central axis X and being linear moveable in axial direction of the central axis X. Additionally there is a rotatable driving element 3 positioned in the housing 1 to drive the valve body 2 for the rotation and for the linear movement. A linear profile 4 acc. fig. 6 of the driving element 3 causes the linear stroke movement of the valve body 2. A rotation profile 5 of the driving element 3 acc. fig. 6 and of the valve body 2 acc. fig. 5 causes the rotation. The rotation profile includes a toothing on the inside of the outer collar of the valve body 2. The toothing at valve body 2 could alternatively be provided more in the centre of the valve body 2. This further inwardly arranged toothing (not shown) would also be concentric to the central axis X, but would have a smaller diameter than the embodiment according to Figure 5 and would be designed as external toothing. Due to the linear profile 4 and the rotation profile 5, the rotation and the linear movement of the valve body 2 are repeatable alternately, whereby the direction of the rotation of the driving element 3 remains the same.

Acc. Fig. 3 the valve body 2 in its sealed position. All channel walls 2.3 are in contact with the housing surface 1.3 of the working chamber 1.1 and the channels 2.3 a-d are tightly closed via the housing surface 1.3 and are separated from each other.

Acc. fig. 4 the valve body 2 is lifted about 2 mm from its sealed position within the working chamber 1.1, hence the valve surface 2.7 including all channel walls 2.3 have no or very weak contact with the housing surface 1.3 of the working chamber 1.1. The valve body 2 is ready for turning before getting lowered in its sealed position again.

The valve body 2 has a circumferential valve surface 2.7 and a plurality channel walls 2.3 generating plural of channels 2.3a-d with a central channel axis AC orientated parallel to the valve surface 2.7 and coaxial to the centre axis X. The valve surface 2.7 including the channel walls 2.3, i.e., the channels 2.3 a-f being covered with a sealing element 2.1. Additionally, there are sealing lips 3b on the top of the channel walls 2.3 as part of the sealing element 2.1.

The channels 2.3a-d, respectively the central channel axis AC and the ports 1.1a-h are arranged in the axial direction in two different planes P1, P2, the two different planes P1, P2 being aligned at right angles to the central axis X and axially spaced by distance SP. The same applies to the plurality of ports 1.1a-h recognizable in fig. 4, 7.

A spring as loading component 6 is assembled between the housing 1 and the valve body 2, by means of which that valve body 2 is preloaded in axial direction against the driving element 3 and its driving surface 3.1 with its linear profile 4. If said cam 3.4 releases said sliding pin 2.8 the valve body 2 will be lifted by said spring 6.

### List of references

- 1: housing
- 1.1: working chamber
- 1.1a-h: port
- 1.2: cover
- 1.2a: bearing
- 1.3: housing surface
- 2: valve body
- 2.1: sealing element
- 2.1a: sealing lip
- 2.3: channel wall
- 2.3a-d: channel
- 2.4: sealing element
- 2.5: toothing spool tooth
- 2.6: openings
- 2.7: valve surface
- 2.8: sliding pin
- 3: driving element
- 3.1: driving surface
- 3.4: cams
- 3.5: toothing
- 3.6: shaft
- 3A: sector
- 3B: sector
- 4: linear profile
- 5: rotation profile
- 6: loading component, spring
- AC: channel axis
- RD: rotation axis
- SP: distance
- X: central axis

## Claims

1. A multiport valve module system, comprising
a) a housing (1) with a plurality of ports (1.1a-h) has a central axis (X), which encloses a working chamber (1.1) closed with a cover (1.2) that is connected to the housing (1) for sealing the working chamber (1.1);
b) a valve body (2) with at least one channel (2.3a-d) with a central channel axis (AC), placed in the working chamber (1.1) and being rotatable about the central axis (X) and being linear moveable in axial direction of the central axis (X);
c) a rotatable driving element (3) positioned in the housing (1) to drive the valve body (2) for the rotation and for the linear movement;
d) a linear profile (4) of the driving element (3) engaged with the valve body (2) for linear movement;
e) a rotation profile (5) of the driving element (3) and of the valve body (2) for causing the rotation;
**characterized in that**
the linear profile (4) and the rotation profile (5) allow the rotation and the linear movement of the valve body (2) to be repeated alternately, whereby the direction of the rotation of the driving element (3) remains the same.

2. A multiport valve module system according to claim 1,
**characterized in that**
the linear profile (4) is aligned in axial direction and the rotation profile (5) is aligned in radial direction, whereby the connection and disconnection between the valve body (2) and the driving element (3) via said rotation profile (5) is alternating or discontinuous.

3. A multiport valve module system according to claim 1 or 2,
**characterized in that**
the linear profile (4) comprises at least one cam (3.4) at the driving element (3) and at least a sliding pin (2.8) at the valve body (2) with the cam (3.4) and the sliding pin (2.4) in active contact in axial direction.

4. A multiport valve module system according to anyone of the preceding claims, **characterized in that**
the rotation profile (5) comprises a radially toothing (2.5) positioned circumferentially at the valve body (2) and comprises a radially toothing (3.5) encircling the driving element (3) at least partly.

5. A multiport valve module system according to anyone of the preceding claims, **characterized in that**
the transmission ratio between the rotation of the driving element (3) and the rotation of the valve body (2) is greater than 1/1, preferred greater than 3/1 or 4/1.

6. A multiport valve module system according to anyone of the preceding claims, **characterized in that**
the rotation profile (5) of the driving element (3) has at least two sectors (3A, 3B), at least one sector (3B) which has the radial toothing (3.5) and at least one other sector (3A) without radial toothing (3.5).

7. A multiport valve module system according to anyone of the preceding claims, **characterized in that**
the driving element (3) has a rotation axis (RD) positioned with an off-set (OS) to the central axis (X) or being coaxial to the central axis (X).

8. A multiport valve module system according to anyone of the preceding claims, **characterized in that**
the transmission of the driving force from the driving element (3) to the valve body (2) takes place directly from the driving element (3) to the valve body (2) or indirectly by other components.

9. A multiport valve module system according to anyone of the preceding claims, **characterized in that**
the valve body (2) has a circumferential valve surface (2.7) and a plurality of channels (2.3a-d) orientated with the central channel axis (AC) parallel to the valve surface (2.7) and with the valve surface (2.7) and the channels (2.3 a-f) being covered with a sealing element (2.1).

10. A multiport valve module system according to anyone of the preceding claims, **characterized in that**
the channels (2.3a-d) with their respective central channel axis (AC) and/or the ports (1.1a-h) are arranged in the axial direction in at least two different planes (P1, P2), the two different planes (P1, P2) being aligned at right angles to the central axis (X) and axially spaced by one distance (SP).

11. A multiport valve module system according to anyone of the preceding claims, **characterized in that**
a loading component (6) is assembled between the housing (1) and the valve body (2), by means of which that valve body (2) is preloaded in axial direction against the driving element (3).

12. Method for moving a multiport valve module system comprising a housing (1) has a central axis (X), which encloses
a) a working chamber (1.1) and
b) a valve body (2) placed in the working chamber (1.1), being rotatable about the central axis (X) and being linear moveable in axial direction of the central axis (X) and
c) a rotatable driving element (3) positioned in the housing (1) to drive the valve body (2), whereby
d) when rotating the driving element (3), the valve body (2) is alternately moved in the axial direction or rotated and
e) the rotation and the linear movement are repeated by rotating the driving element (3) in the same direction.

## Amended claims

### Amended claims in accordance with Rule 137(2) EPC.

1. A multiport valve module system, comprising
a) a housing (1) with a plurality of ports (1.1a-h) has a central axis (X), which encloses a working chamber (1.1) closed with a cover (1.2) that is connected to the housing (1) for sealing the working chamber (1.1);
b) a valve body (2) with at least one channel (2.3a-d) with a central channel axis (AC), placed in the working chamber (1.1) and being rotatable about the central axis (X) and being linear moveable in axial direction of the central axis (X);
c) a rotatable driving element (3) positioned in the housing (1) to drive the valve body (2) for the rotation and for the linear movement;
d) a linear profile (4) of the driving element (3) engaged with the valve body (2) for linear movement;
e) a rotation profile (5) of the driving element (3) and of the valve body (2) for causing the rotation;
**characterized in that**
the linear profile (4) and the rotation profile (5) are two different mechanical drives to allow the rotation and the linear movement of the valve body (2) to be repeated alternately, thus discontinuous one after the other, whereby the direction of the rotation of the driving element (3) remains the same.

## Amended claims

### Amended claims under Art. 19.1 PCT

1. A multiport valve module system, comprising
a) a housing (1) with a plurality of ports (1.1a-h) has a central axis (X), which encloses a working chamber (1.1) closed with a cover (1.2) that is connected to the housing (1) for sealing the working chamber (1.1);
b) a valve body (2) with at least one channel (2.3a-d) with a central channel axis (AC), placed in the working chamber (1.1) and being rotatable about the central axis (X) and being linear moveable in axial direction of the central axis (X);
c) a rotatable driving element (3) positioned in the housing (1) to drive the valve body (2) for the rotation and for the linear movement;
d) a linear profile (4) of the driving element (3) engaged with the valve body (2) for linear movement;
e) a rotation profile (5) of the driving element (3) and of the valve body (2) for causing the rotation;
**characterized in that**
the linear profile (4) and the rotation profile (5) are two different mechanical drives to allow the rotation and the linear movement of the valve body (2) to be repeated alternately, thus discontinuous one after the other, whereby the direction of the rotation of the driving element (3) remains the same, wherein
the linear profile (4) comprises at least one cam (3.4) at the driving element (3) and at least a sliding pin (2.8) at the valve body (2) with the cam (3.4) and the sliding pin (2.4) in active contact in axial direction, wherein the rotation profile (5) of the driving element (3) has at least two sectors (3A, 3B), at least one sector (3B) which has the radial toothing (3.5) and at least one other sector (3A) without radial toothing (3.5).
